(19) Europäisches Patentamt
European Patent Office
Office européen des brevets

(11) **EP 1 516 023 B1**

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(21) Anmeldenummer: **03755939.0**

(22) Anmeldetag: **23.05.2003**

(51) Int Cl.:
***C09D 167/08*** (2006.01)

(86) Internationale Anmeldenummer:
**PCT/EP2003/005404**

(87) Internationale Veröffentlichungsnummer:
**WO 2003/102095 (11.12.2003 Gazette 2003/50)**

(54) **BESCHICHTUNGSSTOFF, VERFAHREN ZU SEINER HERSTELLUNG UND SEINE VERWENDUNG ZUR HERSTELLUNG HAFTFESTER BESCHICHTUNGEN**

COATING SUBSTANCE, METHOD FOR THE PRODUCTION THEREOF, AND USE THEREOF FOR THE PRODUCTION OF ADHESIVE COATINGS

MATIERE DE REVETEMENT, PROCEDE DE FABRICATION DE LADITE MATIERE ET UTILISATION DE CETTE MATIERE POUR FABRIQUER DES REVETEMENTS ADHERENTS

(84) Benannte Vertragsstaaten:
**AT BE BG CH CY CZ DE DK EE ES FI FR GB GR HU IE IT LI LU MC NL PT RO SE SI SK TR**

(30) Priorität: **01.06.2002 DE 10224380**

(43) Veröffentlichungstag der Anmeldung:
**23.03.2005 Patentblatt 2005/12**

(73) Patentinhaber: **BASF Coatings AG**
**48165 Münster (DE)**

(72) Erfinder:
• **ALLARD, Maxime**
**48159 Münster (DE)**
• **KAUFFER, Dominique**
**48317 Drensteinfurt (DE)**
• **REHER, Thomas**
**48165 Münster (DE)**

(74) Vertreter: **Leifert & Steffan**
**Patentanwälte**
**Postfach 10 40 09**
**40031 Düsseldorf (DE)**

(56) Entgegenhaltungen:
**EP-A- 0 922 738**     **WO-A-01/40336**
**US-A- 5 039 740**     **US-A- 5 744 248**

**Beschreibung**

Die vorliegende Erfindung betrifft einen neuen, von organischen Lösemitteln freien, lufttrocknenden und mit aktinischer Strahlung härtbaren Beschichtungsstoff (100%-System). Außerdem betrifft die vorliegende Erfindung ein neues Verfahren zur Herstellung eines von organischen Lösemitteln freien, lufttrocknenden und mit aktinischer Strahlung härtbaren Beschichtungsstoffs. Des weiteren betrifft die vorliegende Erfindung die Verwendung des neuen, von organischen Lösemitteln freien, lufttrocknenden und mit aktinischer Strahlung härtbaren Beschichtungsstoffs zur Herstellung haftfester Beschichtungen.

Von organischen Lösemitteln freie, mit aktinischer Strahlung härtbare Beschichtungsstoffe sind bekannt. Sie werden von der Fachwelt auch als 100%-Systeme bezeichnet, weil sie nur oder im wesentlichen nur aus den Anteilen bestehen, die die hieraus hergestellten Beschichtungen aufbauen. Unter aktinischer Strahlung ist elektromagnetische Strahlung, wie nahes Infrarot (NIR), sichtbares Licht, UV-Strahlung und Röntgenstrahlung, insbesondere UV-Strahlung, oder Korpuskularstrahlung, wie Elektronenstrahlung, zu verstehen.

Mit aktinischer Strahlung härtbare Beschichtungsstoffe, insbesondere 100%-Systeme, werden auf fast allen Gebieten der Lackierung angewandt. Lediglich in der Coil-Coating-Lackierung wird bisher auf den Einsatz dieser Beschichtungsstoffe verzichtet, da die hieraus hergestellten Beschichtungen nicht die notwendige Haftung auf den Coils und die notwendige hohe Flexibilität für die nachträgliche Verformung aufweisen. Nichts desto trotz besteht der Wunsch, die von organischen Lösemitteln freien 100%-Systeme auch für das Coil Coating zu verwenden.

Mit aktinischer Strahlung radikalisch härtbare Beschichtungsstoffe auf der Basis von Acrylaten härten sehr schnell, weisen aber ein besonders hohen Polymerisationsschrumpf auf. Außerdem kann eine gute Haftung auf blankem Stahl und auf galvanisiertem, elektroverzinktem und phosphatiertem Stahl nur durch die Zugabe von carboxylgruppenhaltigen Oligomeren einer hohen Säurezahl oder Derivaten von Methacryloylphosphorsäure erreicht werden. Diese Additive sind aber nicht sehr stabil und nur sehr wenig mit hydrophoben olefinisch ungesättigten Monomeren verträglich. Sie lösen die Kristallisation von Bestandteilen der Beschichtungsstoffe aus und inhibieren sehr stark die Strahlenhärtung. Sie erhöhen die Hydrophilie der Beschichtungen und verringern die Beständigkeit gegenüber Salzspray. Außerdem wird die Verträglichkeit der Beschichtungen mit den allermeisten Korrosionsschutzpigmenten signifikant verringert, da diese überwiegend basisch sind.

Mit aktinischer Strahlung kationisch härtbare Beschichtungsstoffe auf der Basis von Epoxiden weisen nur einen geringen Polymerisationsschrumpf auf. Die Haftung der hieraus hergestellten Beschichtungen auf blankem Stahl oder Aluminium kann in der gleichen Weise wie bei den radikalisch härtbaren Beschichtungsstoffe eingestellt werden. Ein wesentlicher Nachteil ist aber die mangelnde Flexibilität der Beschichtungen aufgrund des so genannten »Dunkeleffekts«. Dieser tritt sogar bei den Beschichtungsstoffen auf, die mit linearen Polyolen flexibilisiert worden sind, und beruht auf einer nachträglichen Versprödung der Beschichtungen. Außerdem sind die betreffenden Beschichtungen sehr empfindlich gegenüber der Einwirkung von Schadstoffen, insbesondere solchen, die nucleophile Gruppen enthalten. Dies verhindert auch die Verwendung der allermeisten Korrosionsschutzpigmente in den Beschichtungen.

Es ist allgemein bekannt, dass lufttrocknende Beschichtungsstoffe auf der Basis von Alkydharzen eine sehr gute Haftung auf zahlreichen Gebrauchsmetallen aufweisen. Nachteilig ist ihre langsam Härtung und ihr hoher Gehalt an organischen Lösemitteln.

Aus dem amerikanischen Patent US 4,668,529 A1 ist ein Beschichtungsstoff für die Reparaturlackierung bekannt, der einen thermisch härtbaren Füller auf der Basis nicht näher spezifizierter Harze sowie mit UV-Strahlung härtbarer niedermolekularer Reaktivverdünner enthält. Ob dieser Reparaturfüller auch für das Coil Coating geeignet ist, ist nicht bekannt.

Aus dem europäischen Patent EP 1 032 474 B1 sind Beschichtungsstoffe bekannt, die thermisch härtbare Bindemittel und mit UV-Strahlung radikalisch und/oder kationisch härtbare Bindemittel enthalten. Lufttrocknende Alkydharze werden nicht eingesetzt. Ebenso wenig werden 100%-Systeme offenbart.

Aufgabe der vorliegenden Erfindung ist es, ein von organischen Lösemitteln freier, mit aktinischer Strahlung radikalisch oder kationisch härtbarer Beschichtungsstoff (100%-System) bereitzustellen, der die Nachteile des Standes der Technik nicht mehr länger aufweist, sondern der sich auch mit Hilfe des Coil-Coatings-Verfahrens applizieren lässt, rasch aushärtet, keinen oder nur einen sehr geringen Polymerisationsschrumpf aufweist und Beschichtungen liefert, die auf allen Gebrauchsmetallen, insbesondere auf blankem Stahl, galvanisiertem, elektroverzinktem und phosphatiertem Stahl und Aluminium, auf Beschichtungen, insbesondere Primerlackierungen, und auf SMC (Sheet Moulded Compounds) und BMC (Bulk Moulded Compounds) hervorragend haften.

Die neuen Beschichtungen sollen außer einer hervorragenden Haftung eine besonders hohe Flexibilität, Verformbarkeit, Chemikalienbeständigkeit und Witterungsbeständigkeit aufweisen, sodass sie sich auch für das Coil Coating eignen. Die neuen Beschichtungen sollen insbesondere hervorragend als Klarlackierungen, Decklackierungen, temporäre oder permanente Schutzschichten, Primerlackierungen, Versiegelungen und Antifingerabdruck-Lackierungen geeignet sein.

Demgemäß wurde der neue, von organischen Lösemitteln freie, lufttrocknende und mit aktinischer Strahlung radikalisch oder kationisch härtbare Beschichtungsstoff (100%-System) gefunden, der

(A) mindestens ein lösemittelfreies, lufttrocknendes Alkydharz einer Öllänge von 20 bis 60%, worin 45 bis 65 Equ.-% der in den ungesättigten Fettsäureresten vorhandenen olefinisch ungesättigten Doppelbindungen konjugiert sind,

enthält und im Folgenden als »erfindungsgemäßer Beschichtungsstoff« bezeichnet wird.

Weitere Erfindungsgegenstände ergeben sich aus der Beschreibung.

Im Hinblick auf den Stand der Technik war es überraschend und für den Fachmann nicht vorhersehbar, dass die Aufgabe, die der vorliegenden Erfindung zugrundelag, im Kern durch die erfindungsgemäße Verwendung des lösemittelfreien, lufttrocknenden Alkydharzes (A) in mit aktinischer Strahlung radikalisch oder kationisch härtbaren 100%-Systemen gelöst werden konnte.

insbesondere war es überraschend, sich sich der erfindungsgemäße Beschichtungsstoff auch mit Hilfe des Coil-Coatings-Verfahrens applizieren ließ, rasch aushärtete, keinen oder nur einen sehr geringen Polymerisationsschrumpf aufwies und Beschichtungen lieferte, die auf allen Gebrauchsmetallen, insbesondere auf blankem Stahl, galvanisiertem, elektroverzinktem und phosphatiertem Stahl und Aluminium, auf Beschichtungen, insbesondere Primerlackierungen, und auf SMC (Sheet Moulded Compounds) und BMC (Bulk Moulded Compounds) hervorragend hafteten.

Die neuen Beschichtungen wiesen außer einer hervorragenden Haftung auch eine besonders hohe Flexibilität, Verformbarkeit, Chemikalienbeständigkeit und Witterungsbeständigkeit auf, sodass sie sich auch für das Coil Coating eigneten. Die neuen Beschichtungen waren insbesondere hervorragend als Ktarlackierungen, Decklackierungen, temporäre oder permanente Schutzschichten, Primerlackierungen, Versiegelungen und Antifingerabdruck-Lackierungen geeignet.

Der erfindungsgemäße Beschichtungsstoff enthält mindestens ein, insbesondere ein, lösemittelfreies, lufttrocknendes Alkydharz einer Öllänge oder Ölgehalts von 20 bis 60%, insbesondere 25 bis 60%. 45 bis 65, insbesondere 48 bis 60 Equ.-%, der in den ungesättigten Fettsäureresten des Alkydharzes vorhandenen olefinisch ungesättigten Doppelbindungen sind konjugiert. Wegen seiner Öllänge oder Ölgehalts wird das Alkydharz auch als mittelöliges oder mittelfettes Alkydharz bezeichnet.

Im Rahmen der vorliegenden Erfindung bedeutet »lösemittelfrei«, dass das Alkydharz (A) und der erfindungsgemäße Beschichtungsstoff eine so geringen Gehalt an organischen Lösemitteln aufweisen, dass ihre anwendungstechnischen Eigenschaften hierdurch nicht geprägt, insbesondere nicht negativ beeinflusst werden. Vorzugsweise liegt der Gehalt an organischen Lösemitteln, bezogen auf das Alkydharz (A) oder auf den erfindungsgemäße Beschichtungsstoff, unter 20, bevorzugt unter 10, besonders bevorzugt unter 5 und glanz besonders bevorzugt unter 1 Gew.-% insbesondere unterhalb der Nachweisgrenzen der organischen Lösemittel.

Lufttrocknende Alkydharze, wie Leinöl-, Sojaöl-, Safloröl- oder Ricinen-Alkydharze, und ihre Herstellung sind seit langem bekannt und werden beispielsweise in Römpp Lexikon Lacke und Druckfarben, Georg Thieme Verlag, Stuttgart, New York, 1998, Seiten 20 bis 22, »Alkydharze«, beschrieben.

Die ungesättigten Fettsäurereste der Alkydharze leiten sich ab von ungesättigten Fettsäuren, wie Lauroleinsäure (Dodecensäure), Myristoleinsäure (Tetradecensäure), Palmitoleinsäure (Hexadecensäure), Ölsäure (Octadecensäure), Gadoleinsäure (Eicosensäure), Erucasäure (Docosensäure), Ricinolsäure (12-Hydroxyoctadecensäure), Linolsäure (Octadecensäure), Linolensäure (Octadecatriensäure), Elaeostearinsäure, Eicosapentensäure oder Docosahexaensäure, die in pflanzlichen und tierischen Ölen, wie Rizinusöl, dehydratisiertes Rizinusöl (Castor Oil), Kokosöl, Palmöl, Erdnussöl, Baumwollöl, Sojabohnenöl, Saffloröl, Sonnenblumenöl, OH-Sonnenblumenöl, Leinöl, erucareiches und erucaarmes Rüböl, Holzöl, Oiticicaöl, Schmalz, Talk, Spermöl und Heringsöl, vorkommen bzw. sich hieraus gewinnen lassen.

Die ungesättigten Fettsäuren sind handelsübliche Produkte und werden beispielsweise von der Firma UNIQEMA unter den Marken Prifac ® oder Dedico ®, der Firma Henkel unter der Marke Isomerginsäure ® oder der Firma Akzo unter der Marke Nouracid ® vertrieben.

Der erfindungswesentliche Gehalt an Fettsäureresten (Öllange) und an Fettsäureresten mit konjugierten Doppelbindungen kann vom Fachmann leicht über die Menge an Fettsäuren insgesamt und über das Verhältnis von olefinisch ungesättigten Fettsäuren ohne konjugierte Doppelbindungen zu olefinisch ungesättigten Fettsäuren mit konjugierten Doppelbindungen eingestellt werden.

Bekanntermaßen werden die Alkydharze aus Polyolen und mehrwertigen Carbonsäuren und den vorstehend genannten trocknenden Fettsäuren hergestellt.

Beispiele geeigneter mehrwertiger Alkohol sind Glyzerin, Pentaerythrit, Trimethylolethan und Trimethylolpropan.

Beispiele geeigneter mehrwertiger Carbonsäuren sind Tetra- und Hexahydrophtalsäure, Methylnadic Acid, Methylendomethylen- und 3,6-Endomethylentetrahydrophtalsäure sowie die entsprechenden Anhydride dieser Säuren.

Die Alkydharze (A) können auch mit mindestens einer Modifizierungskomponente, wie Öle, Naturharze, Phenolharze, Acrylatharze, Styrol, Epoxidharze, Siliconharze oder Isocyanate, modifiziert sein.

Die Alkydharze (A) sind handelsübliche Produkte und werden beispielsweise unter der Marke Alkydal ® R 35 von der Firma Bayer AG, Italkyd ® R35 von der Firma Multi Resin vertrieben. Wesentlich ist, dass die Alkydharze (A) im vorstehend beschriebenen Sinne lösemittelfrei sind bzw. beispielsweise durch Destillation von organischen Lösemitteln befreit werden.

Der Gehalt des erfindungsgemäßen Beschichtungsstoffs an dem Alkydharz (A) kann breit variieren und richtet sich nach den Erfordernissen des Einzelfalls. Vorzugsweise liegt der Gehalt bei 30 bis 70, insbesondere 35 bis 70 Gew.-%, jeweils bezogen auf den erfindungsgemäße Beschichtungsstoff.

Handelt es sich bei dem erfindungsgemäßen Beschichtungsstoff um einen mit aktinischer Strahlung radikalisch härtbaren Beschichtungsstoff enthält er mindestens ein, insbesondere ein, monofunktionelles, olefinisch ungesättigtes Monomer (B), das keine aromatischen Struktureinheiten enthält und das, für sich selbst gesehen, Homopolymerisate einer Glasübergangstemperatur ≥ 50, insbesondere ≥ 70°C aufbaut.

Vorzugsweise wird das Monomer (B) aus der Gruppe, bestehend aus hydroxyfunktionellen Monomeren und der von reaktiven funktionellen Gruppen freien Monomeren (Neutralmonomere), ausgewählt. Vorzugsweise werden Neutralmonomere (B) eingesetzt. Bevorzugt werden die Neutralmonomere (B) aus der Gruppe, bestehend aus Cyclohexyl-, 4-tertiär-Butylcyclohexyl-, Dicyclopentenyloxyethyl- und Isobornyl(meth)acrylat ausgewählt. Besonders bevorzugt sind die Neutralmonomeren (B) Acrylate. Als besonders bevorzugt wird Isobornylacrylat verwendet.

Vorzugsweise enthält der erfindungsgemäße Beschichtungsstoff das Monomer (B) in einer Menge von, bezogen auf den Beschichtungsstoff, 5 bis 70, insbesondere 10 bis 65 Gew.-%.

Am Markt erhältlich sind auch lösemittelfreie Produkte, die bereits ein Alkydharz (A) und ein Monomer (B) enthalten. Sie werden beispielsweise unter der Marke Syncryl ® 432 von der Firma Multi Resin vertrieben.

Außerdem enthält der radikalisch härtbare erfindungsgemäße Beschichtungsstoff mindestens ein, insbesondere ein, olefinisch ungesättigtes Monomer (C), ausgewählt aus der Gruppe, bestehend aus di- und höherfunktionellen, insbesondere difunktionellen Monomeren mit mindestens zwei, insbesondere zwei, olefinisch ungesättigten Doppelbindungen und mindestens einer, insbesondere einer, flexibilisierenden Struktureinheit im Molekül, die als Bestandteil dreidimensionaler Netzwerke deren Glasübergangstemperatur Tg erniedrigt.

Vorzugsweise liegen die Doppelbindungen der olefinisch ungesättigten Monomeren (C) in Methacrylat- und/oder Acrylatgruppen, insbesondere Acrylatgruppen, vor.

Die flexibilisierenden Struktureinheiten sind vorzugsweise zweibindige organische Reste. Bevorzugt werden die flexibilisierenden Struktureinheiten aus der Gruppe, bestehend aus zweibindigen aliphatischen Kohlenwasserstoffresten und zweibindigen, Heteroatome enthaltenden, aliphatischen Kohlenwasserstoffresten, ausgewählt.

Beispiele geeigneter flexibilisierender, zweibindiger organischer Reste dieser Art sind substituierte oder unsubstituierte, bevorzugt unsubstituierte, lineare oder verzweigte, vorzugsweise lineare, Alkandiyl-Reste mit 4 bis 30, bevorzugt 5 bis 20 und insbesondere 6 Kohlenstoffatomen, die innerhalb der Kohlenstoffkette auch cyclische Gruppen enthalten können, sofern die Kohlenstoffketten zwischen den die olefinisch ungesättigten Doppelbindungen enthaltenden Gruppen und den cyclischen Gruppen jeweils mehr als zwei Kohlenstoffatome enthalten.

Beispiele gut geeigneter linearer Alkandiyl-Reste sind sind Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyl, Tetradecan-1,14-diyl, Pentadecan-1,15-diyl, Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, insbesondere Hexamethylen.

Beispiele gut geeigneter Alkandiyl-Reste, die in der Kohlenstoffkette auch cyclische Gruppen enthalten, sind 2-Heptyl-1-pentyl-cyclohexan-3,4-bis(non-9-yl), Cyclohexan-1,2-, 1,4- oder -1,3-bis(eth-2-yl), Cyclohexan-1,3-bis(prop-3-yl) oder Cyclohexan-1,2-, 1,4- oder 1,3-bis(but-4-yl).

Weitere Beispiele geeigneter zweibindiger organischer Reste, die Heteroatome enthalten, sind zweiwertige Polyesterreste mit wiederkehrenden Polyesteranteilen der Formel -(-CO-$(CHR)_m$- $CH_2$-O-)-aus. Hierbei ist der Index m bevorzugt 4 bis 6 und der Substituent R = Wasserstoff, ein Alkyl-, Cycloalkyl- oder Alkoxy-Rest. Kein Substituent enthält mehr als 12 Kohlenstoffatome.

Weitere Beispiele geeigneter zweibindiger organischer Reste, die Heteroatome enthalten, sind zweiwertige lineare Polyetherreste, vorzugsweise mit einem zahlenmittleren Molekulargewicht von 400 bis 5.000, insbesondere von 400 bis 3.000. Gut geeignete Polyetherreste haben die allgemeine Formel -(-O-$(CHR^1)_o$-$)_p$O-, wobei der Substituent $R^1$ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherreste, die sich von Poly(oxyethylen)glykolen, Poly(oxypropylen)glykolen und Poly(oxybutylen)glykolen ableiten, genannt.

Des weiteren kommen auch lineare zweibindige Siloxanreste, wie sie beispielsweise in Siliconkautschuken vorliegen, hydrierte Polybutadien- oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste in Betracht.

Als Substituenten kommen alle organischen funktionellen Gruppen in Betracht, welche im wesentlichen inert sind, d. h., daß sie keine Reaktionen mit den Bestandteilen des erfindungsgemäßen Beschichtungsstoffs eingehen.

Beispiele geeigneter inerter organischer Reste sind Alkylgruppen, insbesondere Methylgruppen, Halogenatome, Nitrogruppen, Nitrilgruppen oder Alkoxygruppen.

Von den vorstehend beschriebenen zweibindigen organischen Resten sind die Alkandiyl-Reste, die keine Substituenten und keine cyclischen Gruppen in der Kohlenstoffkette enthalten, von Vorteil und werden deshalb bevorzugt verwendet.

Die olefinisch ungesättigten Monomere sind handelsübliche Produkte und werden beispielsweise unter den Marken Laromer ® 8986 von der Firma BASF Aktiengesellschaft, Photomer ® 6891 und 5429 von der Firma Cognis, Actilane ® 505 von der Firma Akzo und Crodamer ® UVE 150 oder 200 von der Firma Croda oder Aronix ® 6000 von der Firma Toagosei vertrieben. Außerdem stehen mit Fettsäuren hydrophob modifizierte aliphatische Epoxyacrylate am Markt zur Verfügung, die beispielsweise unter den Marken Radcure ® IRR 465 oder 517 von der Firma UCB, Photomer ® 3215 von der Firma Cognis, Laromer ® 8765 von der Firma BASF Aktiengesellschaft und CN 132 von der Firma Cray Valley vertrieben werden.

Vorzugsweise sind die olefinisch ungesättigten Monomeren (C) in dem erfindungsgemäßen Beschichtungsstoff einer Menge von 10 bis 70, insbesondere 50 bis 60 Gew.%, jeweils bezogen auf den Beschichtungsstoff, enthalten.

Des weiteren enthält der erfindungsgemäße Beschichtungsstoff mindestens einen, vorzugsweise mindestens zwei und insbesondere zwei Photoinitiatoren (D) für die radikalisch initiierte Photopolymerisation. Es können die üblichen und bekannten Photoinitiatoren (D) verwendet werden. Vorzugsweise wird der Photoinitiator (D) oder werden die Photoinitiatoren (D) aus der Gruppe, bestehend aus Benzilmonoketalen, Acetophenonderivaten, Acylphosphinoxiden, alpha-Acyloximester, Titanocenen, Thioxanthonen, alpha-Sulfonyloxyketonen, und Ferrocenen, ausgewählt. Vorzugsweise sind sie in dem erfindungsgemäßen Beschichtungsstoffen in einer Menge von 0,1 bis 10, insbesondere 0,5 bis 6 Gew.%, jeweils bezogen auf den Beschichtungsstoff, enthalten.

Darüber hinaus kann der erfindungsgemäße Beschichtungsstoff noch mindestens einen üblichen bekannten Zusatzstoff (E) in üblichen und bekannten, wirksamen Mengen enthalten. Vorzugsweise wird der Zusatzstoff (E) oder werden die Zusatzstoffe (E) aus der Gruppe, bestehend aus Trockenstoffen, Lichtschutzmitteln, von den Monomeren (B) und den Monomeren (C) verschiedenen olefinisch ungesättigten Monomeren, Verlaufmitteln, Polyisocyanaten und olefinisch ungesättigte Doppelbindungen enthaltenden Polyisocyanaten (Isocyanatoacrylate) ausgewählt.

Vorzugsweise sind die Zusatzstoffe (E) in dem erfindungsgemäßen Beschichtungsstoff in einer Menge von 0,01 bis 50 Gew.-%, bezogen auf den Beschichtungsstoff, enthalten. Handelt es sich bei dem Zusatzstoff (E) um ein von den Monomeren (B) und den Monomeren (C) verschiedenes olefinisch ungesättigtes Monomer, wird es in einer Menge eingesetzt, die maximal 30 Gew.-% der vorhandenen olefinisch ungesättigten Monomeren (A), (B) und (E) beträgt.

Beispiele geeigneter Trockenstoffe (E) sind aus Römpp Lexikon Lacke und Druckfarben, Georg Thieme Verlag, Stuttgart, New York, 1998, Seite 538, »Trockenstoffe«, bekannt.

Beispiele geeigneter Monomere (E) sind monofunktionelle olefinisch ungesättigte Acrylate und Methacrylate, insbesondere Tridecylacrylat 2-Chlor-2-hydroxy-propylmethacrylat, 2-Hydroxy-3-phenoxy-propylacrylat oder Laurylglycidyletheracrylat, die eine flexibilisierende Wirkung haben, oder Tricyclodecandimethanoldiacrylat, Dicyclopentenyloxyethylacrylat und Dicyclopentenylacrylat, die eine hartmachende Wirkung haben.

Geeignete Polyisocyanate (E) sind die üblichen und bekannten Lackpolyisocyanate, wie sie beispielsweise in der deutschen Patentanmeldung DE 199 14 816 A1 beschrieben werden.

Geeignete Isocyanatoacrylate (E) werden in der europäischen Patentanmeldung EP 0 928 802 A1 beschrieben.

Geeignete Lichtschutzmittel und Verlaufmittel sowie weitere übliche und bekannte Zusatzstoffe (E) gehen aus dem Lehrbuch »Lackadditive« von Johan Bieleman, Wiley- VCH, Weinheim, New York, 1998, hervor. Handelt es sich bei dem erfindungsgemäßen Beschichtungsstoff um einen kationisch härtbaren Beschichtungsstoff, enthält dieser außer dem Alkydharz (A) mindestens eine, insbesondere eine, Verbindung (F), mit mindestens zwei Epoxidgruppen. Vorzugsweise wird die Verbindung (F) in dem erfindungsgemäßen Beschichtungsstoff in einer Menge von 10 bis 50, insbesondere 15 bis 40 Gew.%, jeweils bezogen auf den Beschichtungsstoff, eingesetzt.

Beispiele geeigneter Verbindungen (F) sind cycloaliphatische Epoxide, wie 3,4-Epoxycyclohexylmethyl-3,4-epoxycyclohexancarboxylat, erhältlich unter der Marke Cyracure ® 6105 von der Firma Carbide, Bis[1-ethyl(oxetanyl)methyl]ether, erhältlich unter der Marke OXT ® 221 von der Firma Toagosei, 1,4-Bis[3-ethyl-3-oxetanylmethoxy)methyl]benzol, erhältlich unter der Marke OXT ® 121 von der Firma Toagosei, Bisoxetanterephthalat, erhältlich von der Firma UBE unter der Marke Eternacoll ® OXTP oder Biphenylenbisoxetan sowie dessen Novolacderivat, erhältlich von der Firma UBE unter der Marke Eternacoll ® OXBP und Eternacoll ® OXBP NOV.

Vorzugsweise enthält der kationisch härtbare erfindungsgemäße Beschichtungsstoff mindestens einen Photoinitiator (G) für die kationisch initiierte Photopolymerisation, der beispielsweise aus der Gruppe der Triarylsulfoniumsalze und Iodoniumsalze ausgewählt wird. Photoinitiatoren (G) sind handelsübliche Verbindungen und werden beispielsweise unter den Marken oder Handelsbezeichnungen Cyracure ® 6990 von der Firma Dow, CGI 552 von der Firma Ciba Specialty Chemicals, Silicolease 2074 von der Firma Rodia oder CD 1011 oder 1012 von der Firma Cray Valley vertrieben.

Darüber hinaus kann der kationisch härtbare erfindungsgemäße Beschichtungsstoff noch mindestens einen der vorstehend beschriebenen Zusatzstoffe (E) enthalten.

Die vorstehend beschriebenen erfindungsgemäßen Beschichtungsstoffe werden vorzugsweise nach dem erfindungsgemäßen Verfahren hergestellt. Dabei werden

(I) die Bestandteile (A), (B), (C) und (D) sowie gegebenenfalls (E) oder alternativ

(II) die Bestandteile (A) und (F) sowie gegebenenfalls (G) und/oder (E)

miteinander vermischt und die resultierende Mischung homogenisiert. Bevorzugt wird das erfindungsgemäße Verfahren unter Ausschluss von aktinischer Strahlung durchgeführt. Für das Vermischen und Homogenisieren können übliche und bekannte Vorrichtungen, wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer, verwendet werden.

Die erfindungsgemäßen Beschichtungsstoffe sind hervorragend als Coil-Coating-Lacke geeignet. Außerdem eignen sie sich hervorragend für die Herstellung von Beschichtungen auf allen Gebrauchsmetallen, insbesondere auf blankem Stahl, galvanisiertem, elektroverzinktem und phosphatiertem Stahl und Aluminium, auf Beschichtungen, insbesondere Primerlackierungen, und auf SMC (Sheet Moulded Compounds) und BMC (Bulk Moulded Compounds). Die erfindungsgemäßen Beschichtungen sind dabei hervorragend als Klarlackierungen, Decklackierungen, temporäre oder permanente Schutzschichten, Primerlackierungen, Versiegelungen und Antifingerabdruck-Lackierungen geeignet.

Überraschenderweise eignen sie sich auch für die Beschichtung von PVC-Bodenbelägen.

Methodisch weist die Applikation der erfindungsgemäßen Beschichtungsstoffe, keine Besonderheiten auf, sondern kann durch alle üblichen Applikationsmethoden, wie z.B. Spritzen, Rakeln, Streichen, Gießen, Tauchen, Träufeln oder Walzen erfolgen. Generell empfiehlt es sich, unter Ausschluss von aktinischer Strahlung zu arbeiten, um eine vorzeitige Verletzung der erfindungsgemäßen Beschichtungsstoffe zu vermeiden.

Für die Härtung der applizierten erfindungsgemäßen Beschichtungsstoffe mit aktinischer Strahlung kommen Strahlenquellen wie Quecksilberhoch- oder -niederdruckdampflampen oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A1, Spalte 10, Zeile 31 bis Spalte 11, Zeile 22, von R. Stephen Davidson in »Exploring the Science, Technology and Applications of U.V. and E.B. Curing«, Sita Technology Ltd., London, 1999, Chapter I, »An Overview«, Seite 16, Figure 10, oder von Dipl.-Ing. Peter Klamann in »eltosch System-Kompetenz, UV-Technik, Leitfaden für Anwender«, Seite 2, Oktober 1998, beschrieben.

Es ist ein besonderer Vorteil des erfindungsgemäßen Beschichtungsstoffs und erfindungsgemäßen Verfahrens, dass die Härtung an der Luft erfolgen kann.

Vorzugsweise wird bei der Bestrahlung eine Strahlendosis von 100 bis 6.000, vorzugsweise 200 bis 3.000, bevorzugt 300 bis 2.500 und besonders bevorzugt 500 bis 2.000 mJcm$^{-2}$ eingesetzt.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt. Vorzugsweise liegt die Strahlenintensität bei $1 \times 10°$ bis $3 \times 10^5$, bevorzugt $2 \times 10°$ bis $2 \times 10^5$, besonders bevorzugt $3 \times 10°$ bis $2,5 \times 10^5$ und insbesondere $5 \times 10°$ bis $2 \times 10^5$ Wm$^{-2}$.

Die resultierenden erfindungsgemäßen Beschichtungen sind hochflexibel, ohne Beschädigung stark verformbar, chemikallenstabil, witterungsstabil, schwitzwasser- und salzwasserstabil sowie von hoher Haftung zu Substraten und anderen Beschichtungen.

**Beispiele**

**Beispiel 1**

**Herstellung eines Beschichtungsstoffs und von Beschichtungen hieraus**

Es wurde ein Beschichtungsstoff aus 50 Gewichtsteilen Alkydharz einer Öllänge von 35% und eine Hydroxylzahl von 80 mg KOH/g auf der Basis von dehydratisiertem Rizinusöl (Alkydal ® R35 der Firma Bayer AG), 50 Gewichtsteilen Isobornylacrylat, 50 Gewichtsteilen eines Epoxypolyetherdiacrylats (Laromer ® 8986 der Firma BASF Aktiengesellschaft), 5 Gewichtsteilen eines handelsüblichen Photoinitiators (Irgacure ® 184 der Firma Ciba Specialty Chemicals) und 1 Gewichtsteil eines handelsüblichen Verlaufmittels auf Polyacrylatbasis (Disparlon ® LC 900 der Firma King Industries) durch Vermischen der Bestandteile und Homogenisieren der resultierenden Mischung unter Ausschluss von aktinischer Strahlung hergestellt.

Der Beschichtungsstoff wurde unter Ausschluss von aktinischer Strahlung durch Walzenauftrag auf blanken Stahl, galvanisierten Stahl und Edelstahl sowie auf Aluminium appliziert und mit UV-Strahlung einer Strahlendosis von jeweils 2.600 mJcm$^{-2}$ gehärtet.

Die resultierenden Beschichtungen wiesen eine hervorragende Haftung zu den Substraten auf. Dadurch konnte beispielsweise die Verwendung von Öl vermieden werden und direkt "trockener" Stahl hergestellt werden, der sehr gut überlackiert werden konnte.

Die Beschichtungen konnten somit als universelle Primerlackierungen auf blankem Stahl verwendet werden. Dabei bewirkten sie in einer Schichtdicke von 10 $\mu$m im Salzsprühtest eine Beständigkeit von 100 h. Auf sandgestrahltem Stahl bewirkten sie in einer Schichtdicke von 40 $\mu$m im Salzsprühtest eine Beständigkeit von mehr als 350 h.

Die auf dem galvanisierten Stahl vorliegenden Beschichtungen wurden mit einem weißen Decklack beschichtet. Nach der Härtung wies die Mehrschichtlackierung eine sehr gute Haftung zum Substrat und eine sehr gute Zwischenschichthaftung auf (T-Bendtest: T1; Tapetest: T1).

Die Beschichtungen waren vergleichsweise beständig gegenüber organischen Lösemitteln (MEK-Test: 10 Doppelhübe).

## Beispiel 2

### Die Herstellung eines Beschichtungsstoffs und von Beschichtungen hieraus

Beispiel 1 wurde wiederholt, nur dass dem Beschichtungsstoff noch Kobaltoctoat entsprechen einer Menge von 0,05 Gew.-% Kobalt, bezogen auf das Alkydharz, zugesetzt wurden. Die Verarbeitungszeit (Topfzeit) des Beschichtungsstoffs änderte sich hierdurch überraschenderweise nicht. Indes konnte die Strahlungsdosis für die Härtung auf 1.500 mJcm$^{-2}$ gesenkt werden. Es resultierten Beschichtungen, die dieselben vorteilhaften Eigenschaften wie die des Beispiels 1 aufwiesen.

## Beispiele 3 und 4

### Die Herstellung von Isocyanatoacrylaten enthaltenden Beschichtungsstoffen und von Beschichtungen hieraus

Für Beispiel 3 wurde Beispiel 1 wiederholt, wobei ein handelsübliches Isocyanatoacrylat (Roskydal ® 2337 der Firma Bayer AG) in einer Menge zugesetzt wurde, dass ein Äquivalentverhältnis von Isocyanatgruppen zu Hydroxylgruppen im Alkydharz von 1,0 resultierte. Die resultierenden Beschichtungen waren lösemittelbeständig (MEK-Test: 90 Doppelhübe).

Für Beispiel 4 wurde Beispiel 3 wiederholt, wobei an Stelle von Roskydal ® 2337 Roskydal ® 2396 der Firma Bayer AG verwendet wurde. Die resultierenden Beschichtungen waren ebenfalls lösemittelbeständig (MEK-Test: 30 Doppelhübe).

Die Beispiele 3 und 4 zeigten im Vergleich mit Beispiel 1, dass durch die Zugabe von Isocyanstoacrylaten die Lösemittelbeständigkeit der Beschichtungen signifikant verbessert werden konnte.

## Beispiel 5

### Die Herstellung von Beschichtungsstoffen und von Beschichtungen hieraus

Für das Beispiel 5 wurde Beispiel 1 wiederholt, nur dass an Stelle des Alkydharzes auf der Basis von dehydratisiertem Rizinusöl die folgenden Alkydharze verwendet wurden:

### Beispiel 5.1:

Alkydharz einer Öllänge von 28%, eines massenmittleren Molekulargewichts von 10.000 bis 12.000 Dalton und einer Uneinheitlichkeit des Molekulargewichts < 5 auf Basis von Hexahydrophtalsäure und Sonnenblumenöl FA vom Standardtyp mit einem Anteil an konjugierten Doppelbindungen von 48 bis 52 Equ.-%, bezogen auf die Anzahl der vorhandenen Doppelbindungen;

### Beispiel 5.2:

Alkydharz einer Öllänge von 28%, eines massenmittleren Molekulargewichts von 10.000 bis 12.000 Dalton und einer Uneinheitlichkeit des Molekulargewichts < 5 auf Basis von Hexahydrophtalsäure und modifiziertem Sonnenblumenöl FA mit einem Anteil an konjugierten Doppelbindungen von 48 bis 62 Equ.-%, bezogen auf die Anzahl der vorhandenen Doppelbindungen (Edenor ® 6010 der Firma Henkel);

### Beispiel 5.3:

Alkydharz einer Öllänge von 28%, eines massenmittleren Molekulargewichts von 10.000 bis 12.000 Dalton und einer Uneinheitlichkeit des Molekulargewichts < 5 auf Basis von Hexahydrophtalsäure und dehydratisiertem Rizinusöl FA mit einem Anteil ein konjugierten Doppelbindungen von 48 bis 52 Equ.-%, bezogen auf die Anzahl der vorhandenen Doppelbindungen (Dedico ® 5981 der Firma Uniqema);

### Beispiel 5.4:

Alkydharz einer Öllänge von 28%, eines massenmittleren Molekulargewichts 10.000 bis 12.000 Dalton und einer Uneinheitlichkeit des Molekulargewichts < 5 auf Basis von Hexahydrophtalsäure und Leinsamenöl FA mit einem Anteil an konjugierten Doppelbindungen von 50 bis 60 Equ.%, bezogen auf die Anzahl der vorhandenen Doppelbindungen;

Die applizierten Beschichtungsstoffe der Beispiele 5.1 bis 5.4 konnten problemlos gehärtet werden, wobei die Härtungsgeschwindigkeit in der Reihenfolge:

$$5.2 > 5.3 > 5.1 > > 5.4$$

abnahm. Es resultierten sehr flexible, ohne Beschädigung verformbare Beschichtungen.

**Beispiel 6**

**Die Herstellung von Beschichtungsstoffen und Beschichtungen hieraus**

Beispiel 6.1:

Beispiel 5.4 wurde wiederholt, nur dass an Stelle des dort verwendeten Alkydharzes ein höher kondensiertes, epoxidmodifiziertes Alkydharz eingesetzt wurde, das eine Öllänge von 45%, ein massenmittleres Molekulargewicht von 40.000 Dalton, eine Uneinheitlichkeit des Molekulargewichts von 15 und einen Anteil von 62 Equ.-%, bezogen auf die vorhandenen Doppelbindungen, an konjugierten Doppelbindungen aufwies.

Beispiel 6.2:

Beispiel 6.1 wurde wiederholt, nur dass ein noch höher kondensiertes, epoxidmodifiziertes Alkydharz mit einer Öllänge von 45%, einem massenmittleren Molekulargewicht von 120.000 Dalton, einer Uneinheitlichkeit des Molekulargewichts von 18 und einem Anteil von 62 Equ.-%, bezogen auf die vorhandenen Doppelbindungen, an konjugierten Doppelbindungen verwendet wurde.

Die Beschichtungsstoffe der Beispiel 6.1 und 6.2 ließen sich bereits mit einer Strahlendosis von 1.000 mJcm$^{-2}$ rasch aushärten und lieferten Beschichtungen von besonders hoher Lösemittelbeständigkeit (MEK-Test: 90 Doppelhübe).

**Beispiel 7**

**Die Herstellung von Beschichtungsstoffen und von besonders flexiblen Beschichtungen hieraus**

Beispiel 1 wurde wiederholt, nur dass 25 Gew.-% des im Beschichtungsstoff vorhandenen Isobornylacrylats bei

- Beispiel 7.1 durch Tridecylacrylat,

- Beispiel 7.2 durch 3-Chlor-2- hydroxypropylmethacrylat,

- Beispiel 7.3 durch 2-Hydroxy-3-phenoxypropylacrylat und

- Beispiel 7.4 durch Laurylglycidyletheracrylat

ersetzt wurden.

Die resultierenden Beschichtungen waren von hoher Flexibilität und Haftung auf den Substraten und ließen sich besonders leicht ohne Beschädigung verformen.

**Beispiel 8**

**Herstellung von Beschichtungsstoffen und von Antifingerabdruck-Beschichtungen für Edelstahl**

Bei Beispiel 8.1 wurde ein Beschichtungsstoffen aus 50 Gewichtsteilen eines Alkydharzes aus Isomerginsäure, Trimethylolpropan und Cardura ® E 10 (Glycidylester der Versatic ®-Säure 10) (Öllänge: 28%, Gehalt an konjugierten Doppelbindungen: 58 bis 60 Equ.-%), 50 Gewichtsteilen Isobornylacrylat, 30 Gewichtsteilen Epoxypolyetherdiacrylat (Laromer ® 8986 der Firma BASF Aktiengesellschaft), 3 Gewichtsteilen eines handelsüblichen Photoinitiators (Irgacure ® 184 der Firma Ciba Specialty Chemicals), 0,4 Gewichtsteilen eines acrylierten Polysiloxans (Coatsil ® 3503 der Firma Crompton Witco), 0,4 Gewichtsteilen Lithiumsoctoat, Kobaltoctoat in einer Menge, entsprechend 0,05 Gew.-% Kobalt; bezogen auf das Alkydharz, und 12 Gewichtsteilen eines Isocyanatoacrylats (Roskydal ® 2337 der Firma Bayer AG) hergestellt.

Für Beispiel 8.2 wurde Beispiel 8.1 wiederholt, nur dass 30 Gewichtsteile des Alkydharzes, 30 Gewichtsteile Isobornylacrylat, 60 Gewichtsteile Laromer ® 8986, 6 Gewichtsteile Irgacure ® 184, 1 Gewichtsteil Coatsil ® 3503, 0,6 Gewichtsteile Lithiumoctoat, die gleiche Menge an Kobaltoctoat und 24 Gewichtsteile Roskydal ® 2337 verwendet wurden.

Die Beschichtungsstoffe der Beispiel 8.1 und 8.2 wiesen eine Verarbeitungszeit (Topfzeit) von 24 Stunden auf.

Die hieraus hergestellten Beschichtungen auf Edelstahl wiesen hervorragende mechanische Eigenschaften, eine hohe Beständigkeit und eine hervorragende Haftung auf (Bac Ford-Test: keine Veränderung nach 600 h; Reverse Impact-Test mit 1 kg Dorn: in Ordnung; Reverse Impact-Test mit 2 kg Dom: bis 80 cm, entsprechend 15 J, in Ordnung; Tape-Test: in Ordnung; Standard-Küchen- Verschmutzungstest: in Ordnung; lod-Test: in Ordnung; Kaffee-Test: in Ordnung). Die Antifingerabdruck-Wirkung entsprach derjenigen von Polyethylenterephthalatfilmen und von thermisch gehärteten Klarlacken.

Aufgrund der hervorragenden Eigenschaften der Beschichtungen konnten die beschichteten Edelstahlteile problemlos geformt und beispielsweise als Dekorationen für Küchen und andere Verwendungszwecke geformt werden. Die

Beschichtungen konnten daher auch für die Beschichtung von PVC-Bodenbelägen verwendet werden und wiesen dabei eine bessere Verschmutzungsresistenz als die herkömmlichen Urethanacrylat-Systeme auf.

**Beispiel 9**

**Die Herstellung von Beschichtungsstoffen und von Beschichtungen für Aluminium für die Außenanwendung**

Für das Beispiel 9.1 wurde ein Beschichtungsstoff aus 30 Gewichtsteilen des Alkydharzes des Beispiels 1, 28 Gewichtsteilen Isobornylacrylat, 25 Gewichtsteilen Laromer ® 8986, 1,5 Gewichtsteilen Irgacure ® 184, 0,5 Gewichtsteilen Irgacure ® 819 (handelsübliches Lichtschutzmittel der Firma Ciba Specialty Chemicals), 0,5 Gewichtsteilen Coatsil ® 3503 und 2 Gewichtsteilen Sandovur ® TBO2 (handelsübliche Mischung aus einem Lichtschutzmittel auf Basis von Triazin und einem reversiblen Radikalfänger auf Basis von HALS in einem Gewichtsverhältnis von 3 :2) hergestellt.

Für das Beispiel 9.2 wurde ein Beschichtungsstoff aus 33 Gewichtsteilen des Alkydharzes des Beispiels 1, 37 Gewichtsteilen Isobornylacrylat, 40 Gewichtsteilen Laromer ® 8986, 3 Gewichtsteilen Irgacure ® 184, 1 Gewichtsteil Irgacure ® 819, 1 Gewichtsteil Coatsil ® 3503, 1,5 Gewichtsteilen Tinuvin ® 123 (reversibler Radikalfänger auf Basis von HALS) und 2,5 Gewichtsteilen Tinuvin ® 777 (handelsübliches Lichtschutzmittel auf Basis von Triazin) hergestellt.

Dünne Aluminiumfolien wurde mit den Beschichtungsstoffen der Beispiel 9.1 und 9.2 beschichtet, wonach die applizierten Beschichtungsstoffe gehärtet wurden. Die beschichteten Aluminiumfolien der Beispiele 9.1 und 9.2 wurden auf Isolierschichten aus Gummi für die Außenanwendung kaschiert, um die empfindliche Gummihaut vor der Beschädigung durch Vögel zu schützen.

Die Beschichtungen der Beispiele 9.1 und 9.2 boten einen hervorragenden Schutz für das Aluminium und konnten dessen Oberflächenoxidation wirksam unterdrücken, sodass die beschichteten Aluminiumfolien sehr viel länger eine hohe Lichtreflektion aufwiesen als beispielsweise mit Polyethylenterephthalat beschichtete Aluminiumfolien. Während die Polyethylenterephthalat-Beschichtungen bereits nach einem Jahr korrodiert waren und enthafteten und unansehnlich wurden, blieben die Beschichtungen der Beispiele 9.1 und 9.2 klar, haftfest und unbeschädigt (WOM PSA-Test gemäß DIN-ISO 11 341 A: keine Enthaftung und keine Änderung nach 1.250 h). Dadurch konnten die beschichteten Aluminiumfolien der Beispiele 9.1 und 9.2 sehr viel länger die isolierende Wirkung der Isolierschichten aus Gummi verstärken als die in herkömmlicher Weise beschichteten Aluminiumfolien.

**Beispiel 10**

**Die Herstellung von Beschichtungsstoffen und von temporären Schutzschichten für gefettete Stahlröhren**

Für das Beispiel 10.1 wurde das Beispiel 9.1 wiederholt, nur dass keine Lichtschutzmittel verwendet wurden.

Für das Beispiel 10.2 wurde das Beispiel 9.2 wiederholt, nur dass keine Lichtschutzmittel verwendet wurden.

Die Beschichtungsstoffe der Beispiele 10.1 und 10.2 wurden auf gefettete Stahlröhren durch Heißspritzapplikation aufgetragen. Nach der Strahlenhärtung resultierten 40 bis 50 μm dicke temporäre Schutzschichten von sehr guter Haftung.

**Beispiel 11**

**Die Herstellung kationisch härtbarer Beschichtungsstoffe und von Beschichtungen hieraus**

Es wurden Beschichtungsstoffe aus jeweils 70 Gewichtsteilen des Alkydharzes des Beispiels 1, 30 Gewichtsteilen einer Epoxidgruppen enthaltenden Verbindung und 2 Gewichtsteilen eines handelsüblichen Triarylsulfoniumsalzes hergestellt.

Dabei wurde als Epoxidgruppen enthaltende Verbindung bei

- Beispiel 11.1 3,4-Epoxycyclohexylmethyl-3,4-epoxycyclohexancarboxylat, erhältlich unter der Marke Cyracure ® 6105 von der Firma Carbide,

- Beispiel 11.2 Bis[1-ethyl(oxetanyl)methyl]ether, erhältlich unter der Marke OXT ® 221 von der Firma Toagosei,

- Beispiel 11.3 1,4-Bis[3-ethyl-3-oxetanylmethoxy)methyl]benzol, erhältlich unter der Marke OXT ® 121 von der Firma Toagosei,

- Beispiel 11.4 Bisoxetanterephthalat, erhältlich von der Firma UBE unter der Marke Eternacoll ® OXTP,

- Beispiel 11.5 Biphenylenbisoxetan erhältlich von der Firma UBE unter der Marke Eternacoll ® OXBP, und

- Beispiel 11.6 das Novolacderivat von Biphenylenbisoxetan, erhältlich von der Firma UBE unter der Marke Eternacoll ® OXBP NOV,

eingesetzt.

Die Beschichtungsstoffe wurden durch Walzenauftrag auf blanke Stahloberflächen appliziert, wonach man die applizierten Schichten mit UV-Strahlung härtete. Die resultierenden Beschichtungen wiesen eine hervorragende Haftung auf blankem Stahl auf.

**Patentansprüche**

1. Von organischen Lösemitteln freier, lufttrocknende und mit aktinischer Strahlung radikalisch oder kationisch härtbarer Beschichtungsstoff (100%-System), enthaltend

   (A) mindestens ein lösemittelfreies, lufttrocknendes Alkydharz einer Öllänge von 20 bis 60%, bezogen auf das lösemittelfrele Alkydharz, worin 45 bis 65 Equ.-% der In den ungesättigten Fettsäureresten vorhandenen olefinisch ungesättigten Doppelbindungen konjugiert sind.

2. Beschichtungsstoff nach Anspruch 1, **dadurch gekennzeichnet, dass** er, bezogen auf seine Gesamtmenge, 30 bis 70 Gew.-% des Alkydharzes (A) enthält.

3. Beschichtungsstoff nach Anspruch 1 oder 2, **dadurch gekennzeichnet, dass** er ein radikalisch härtbarer Beschichtungsstoff ist, enthaltend

   (B) mindestens ein monofunktionelles, olefinisch ungesättigtes Monomer, das keine aromatische Struktureinhelten enthält und das, für sich selbst gesehen, Homopolymerisate einer Glasübergangstemperatur ≥50 °C aufbaut,
   (C) mindestens ein olefinisch ungesättigtes Monomer, ausgewählt aus der Gruppe, bestehend aus dl- und höherfunktionellen Monomeren mit mindestens zwei olefinisch ungesättigten Doppelbindungen und mindestens einer flexibilisierenden Struktureinheit im Molekül, die als Bestandteil dreidimensionaler Netzwerke deren Glasübergangstemperatur Tg erniedrigt, und gewählt ist aus substituierten, linearen oder vefzweigten Alkandiylresten mit 4 bis 30 Kohlenstoffatomen, die innerhalb der Kohlenstoffkette auch cyclische Gruppen enthalten können, sofern die Kohlenstoffketten zwischen den die olefinisch ungesättigten Doppelbindungen enthaltenden Gruppen und den cyclischen Gruppen jeweils mehr als 2 Kohlenstoffatome enthalten, und
   (D) mindestens einen Photoinitiator für die radikalish initiierte Photopolymerisation sowie gegebenenfalls
   (E) mindestens einen Zusatzstoff,

4. Beschichtungsatoff nach Anspruch 3, **dadurch gekennzeichnet, dass** er, bezogen auf seine Gesamtmenge, 5 bis 70 Gew.-% des Monomers (B) enthält

5. Beschichtungsstoff nach Anspruch 3 oder 4, **dadurch gekennzeichnet, dass** er, bezogen auf seine Gesamtmenge, 10 bis 70 Gew.-% des Monomers (C) enthält.

6. Beschichtungsstoff nach einem der Ansprüche 3 bis 5, **dadurch gekennzeichnet, dass** er, bezogen auf seine Gesamtmenge, 0,1 bis 10 Gew.-% des Photoinitiators (D) enthält

7. Beschlchtungsstoff nach einem der Ansprüche 3 bis 6, **dadurch gekennzeichnet, dass** er, bezogen auf seine Gesamtmenge, 0,01 bis 30 Gew.-% des Zusatzstoffs (E) enthält

8. Beschlchtungsstoff nach einem der Ansprüche 3 bis 7, **dadurch gekennzeichnet**, das das Monomer (B) aus der Gruppe, bestehend aus hydroxyfunktionellen Monomeren und der von reaktiven funktionellen Gruppen freien Monomeren (Neutralmonomeren), ausgewählt wird.

9. Beschichtungsstoff nach Anspruch 8, **dadurch gekennzeichnet, dass** das Monomer (B) ein Neutralmonomer ist.

10. Beschichtungsstoff nach Anspruch 9, **dadurch gekennzeichnet, dass** die Neutralmonomeren (B) aus der Gruppe, bestehend aus Cyclohexyl-, 4-tert-Butylcyclohexyl- und Isobornyl(meth)acriyat, ausgewählt werden.

11. Beschichtungsstoff nach Anspruch 10, **dadurch gekennzeichnet, dass** die Neutralmonomeren (B) Acrylate sind.

12. Beschichtungsstoff nach einem der Ansprüche 3 bis 11, **dadurch gekennzeichnet, dass** die Monomeren (C) zwei olefinisch ungesättigte Doppelbindungen und eine flexibilisierende Struktureinheit im Molekül enthalten.

13. Beschichtungsstoff nach einem der Ansprüche 3 bis 12, **dadurch gekennzeichnet, dass** die Doppelbindungen der olefinisch ungesättigten Monomeren (C) in Methacrylat- und/oder Acrylatgruppen vorliegen.

14. Beschichtungsstoff nach einem der Ansprüche 3 bis 13, **dadurch gekennzeichnet, dass** die flexibilisierende Struktureinheit der olefinisch ungesättigten Monomeren (C) aus der Gruppe, bestehend aus zweibindigen aliphatischen Kohlenwasserstoffresten und zweibindige, Heteroatome enthaltenden, aliphatischen Kohlenwasserstoffresten, ausgewählt wird.

15. Beschichtungsstoff nach einem der Ansprüche 3 bis 14, **dadurch gekennzeichnet, dass** der Photoinitiator (D) aus der Gruppe, bestehend aus Benzilmonoketalen, Acetophenonderivaten, Acylphosphinoxiden, alpha-Acyloximester, Titanocenen, Thioxanthonen, alpha-Sulfonyloxyketonen, und Ferrocenen, ausgewählt wird.

**16.** Beschichtungsstoff nach einem der Ansprüche 1 bis 15, **dadurch gekennzeichnet, dass** der Zusatzstoff (E) aus der Gruppe, bestehend aus Trockenstoffen, Lichtschutzmitteln, von den Monomeren (B) und den Monomeren (C) verschiedenen olefinisch ungesättigten Monomeren, Verlaufmitteln, Polyisocyanaten und olefinisch ungesättigte Doppelbindungen enthaltenden Polyisocyanaten (isocyanatoacrylate) ausgewählt werden.

**17.** Beschichtungsstoff nach Anspruch 1 oder 2, **dadurch gekennzeichnet** das er ein kationisch härtbarer Beschichungsstoffe ist, enthaltend

(F) mindestens eine Verbindung, enthaltend mindestens zwei Epoxidgruppen.

**18.** Beschichtungsstoff nach Anspruch 17, **dadurch gekennzeichnet, dass** er

(G) mindestens einen Photoinitiator für die kationisch initiierts Photopolymerisation

enthält.

**19.** Beschichtungsstoff nach Anspruch 18, **dadurch gekennzeichnet, dass** der Photoinitiator (G) aus der Gruppe der Triarylsulfoniumverbindungen ausgewählt wird.

**20.** Beschichtungsstoff nach einem der Ansprüche 17 bis 19, **dadurch gekennzeichnet, dass** er mindestens einen Zusatzstoff (E) enthält.

**21.** Verfahren zur Herstellung eines von organischen Lösemitteln freien, luftrocknenden und mit aktinischer Strahlung härtbaren Beschichtungsstoffs gemäß einem der Ansprüche 1 bis 20, **dadurch gekennzeichnet, dass** man

(I) die Bestandteilen (A), (B), (C) und (D) sowie gegebenenfalls (E) oder alternativ
(II) die Bestandteile (A) und (F) sowie gegebenenfalls (G) und/oder (E)

miteinander vermischt und die resultierende Mischung homogenisiert.

**22.** Verfahren nach Anspruch 21, **dadurch gekennzeichnet, dass** es unter Ausschluss von aktinischer Strahlung durchgeführt wird.

**23.** Verwendung des Beschichtungsstoffs gemäß einem der Ansprüche 1 bis 20 und des mit Hilfe des Verfahrens gemäß Anspruch 21 oder 22 hergestellten Beschichtungsstoffs als Coll-Coating-Lack.

**24.** Verwendung des Beschlchtungsstoffs gemäß einem der Ansprüche 1 bis 20 und des mit Hilfe des Verfahrens gemäß Anspruch 21 oder 22 hergestellten Beschichtungsstoffs zur Herstellung von Beschichtungen von PVC-Bodenbelägen, unbeschichteten und vorbeschlchteten coils und Röhren aus Stahl und Aluminium sowie von SMC (Sheet Moulded Compounds) und BMC (Bulk Moulded Compounds).

**25.** Verwendung nach Anspruch 24, **dadurch gekennzeichnet, dass** die Beschichtungen Klarlackierungen, Decklackierungen, Primerlacklerungen, temporäre oder permanente Schutzchichten, Versiegelungen und Antifingerabdruck-Lackierungen sind.

**Claims**

**1.** Air-drying coating material curable cationically or free-radically with actinic radiation and free from organic solvents (100% system), comprising

(A) at least one solvent-free air-drying alkyd resin with an oil length of from 20 to 60%, based on the solvent-free alkyd resin, in which from 45 to 65 eq.% of the olefinically unsaturated double bonds present in the unsaturated fatty acid residues are conjugated.

**2.** Coating material according to claim 1, **characterized in that** it contains based on its total amount from 30 to 70% by weight of the alkyd resin (A).

**3.** Coating material according to claim 1 or 2, **characterized in that** it is a free-radically curable coating material comprising

(B) at least one monofunctional olefinically unsaturated monomer containing no aromatic structural units and, viewed per se, forming homopolymers with a glass transition temperature of $\geq 50°C$,
(C) at least one olefinically unsaturated monomer selected from the group consisting of difunctional and higher polyfunctional monomers having at least two olefinically unsaturated double bonds and at least one flexibilizing structural unit in the molecule, which unit as part of three-dimensional networks lowers their glass transition temperature Tg, and is selected from substituted, linear or branched alkanediyl radicals having from 4 to 30 carbon atoms, which within the carbon chain may also contain cyclic groups, provided the carbon chains in each case contain more than 2 carbon atoms between the groups containing the olefinically unsaturated double bonds and the cyclic groups, and
(D) at least one photoinitiator for free-radically initiated photopolymerization, and also, if desired,

(E) at least one additive.

4. Coating material according to claim 3, **characterized in that** it contains based on its total amount from 5 to 70% by weight of the monomer (B).

5. Coating material according to claim 3 or 4, **characterized in that** it contains based on its total amount from 10 to 70% by weight of the monomer (C).

6. Coating material according to any of claims 3 to 5, **characterized in that** it contains based on its total amount from 0.1 to 10% by weight of the photoinitiator (D).

7. Coating material according to any of claims 3 to 6, **characterized in that** it contains based on its total amount from 0.01 to 30% by weight of the additive (E).

8. Coating material according to any of claims 3 to 7, **characterized in that** the monomer (B) is selected from the group consisting of hydroxyfunctional monomers and monomers free from reactive functional groups (neutral monomers).

9. Coating material according to claim 8, **characterized in that** the monomer (B) is a neutral monomer.

10. Coating material according to claim 9, **characterized in that** the neutral monomers (B) are selected from the group consisting of cyclohexyl, 4-tert-butylcyclohexyl, and isobornyl (meth)acrylate.

11. Coating material according to claim 10, **characterized in that** the neutral monomers (B) are acrylates.

12. Coating material according to any of claims 3 to 11, **characterized in that** the monomers (C) contain two olefinically unsaturated double bonds and one flexibilizing structural unit in the molecule.

13. Coating material according to any of claims 3 to 12, **characterized in that** the double bonds of the olefinically unsaturated monomers (C) are present in methacrylate groups and/or acrylate groups.

14. Coating material according to any of claims 3 to 13, **characterized in that** the flexibilizing structural unit of the olefinically unsaturated monomers (C) is selected from the group consisting of divalent aliphatic hydrocarbon radicals and divalent heteroatom-containing aliphatic hydrocarbon radicals.

15. Coating material according to any of claims 3 to 14, **characterized in that** the photoinitiator (D) is selected from the group consisting of benzyl monoketals, acetophenone derivatives, acylphosphine oxides, alpha-acyl oxime esters, titanocenes, thioxanthones, alpha-sulfonyloxy ketones, and ferrocenes.

16. Coating material according to any of claims 1 to 15, **characterized in that** the additives (E) are selected from the group consisting of dryers, light stabilizers, olefinically unsaturated monomers other than the monomers (B) and the monomers (C), leveling agents, polyisocyanates, and polyisocyanates containing olefinically unsaturated double bonds (isocyanato acrylates).

17. Coating material according to claim 1 or 2, **characterized in that** it is a cationically curable coating material comprising

(F) at least one compound containing at least two epoxide groups.

18. Coating material according to claim 17, **characterized in that** it comprises

(G) at least one photoinitiator for cationically initiated photopolymerization.

19. Coating material according to claim 18, **characterized in that** the photoinitiator (G) is selected from the group of the triarylsulfonium compounds.

20. Coating material according to any of claims 17 to 19, **characterized in that** it comprises at least one additive (E).

21. Process for preparing an air-drying coating material which is curable with actinic radiation and free from organic solvents, according to any of claims 1 to 20, **characterized in that**

(I) the ingredients (A), (B), (C), and (D) and also, if desired, (E), or alternatively
(II) the ingredients (A) and (F) and also, if desired, (G) and/or (E),

are mixed with one another and the resulting mixture is homogenized.

22. Process according to claim 21, **characterized in that** it is conducted in the absence of actinic radiation.

23. Use of coating material according to any of claims 1 to 20 and of the coating material prepared with the aid of the process according to claim 21 or 22 as a coil coating material.

24. Use of the coating material according to any of claims 1 to 20 and of the coating material prepared with the aid of the process according to claim 21 or 22 for producing coatings on PVC floor coverings, uncoated and precoated coils and pipes of steel and aluminum, and SMC (Sheet Molded Compounds) and BMC (Bulk Molded Compounds).

25. Use according to claim 24, **characterized in that** the coatings are clearcoats, topcoats, primer coats, temporary or permanent protective coats, seals and antifingerprint coatings.

**Revendications**

1. Substance de revêtement exempte de solvants organiques, séchant à l'air et durcissable par un rayonnement actinique par voie radicalaire ou cationique (système à 100%), contenant

   (A) au moins une résine alkyde exempte de solvant, séchant à l'air, présentant une longueur en huile de 20 à 60%, par rapport à la résine alkyde exempte de solvant, où 45 à 65% en équivalent des doubles liaisons oléfiniquement insaturées présentes dans les radicaux d'acides gras insaturés sont conjugués.

2. Substance de revêtement selon la revendication 1, **caractérisée en ce qu'**elle contient, par rapport à sa quantité totale, 30 à 70% en poids de la résine alkyde (A).

3. Substance de revêtement selon la revendication 1 ou 2, **caractérisée en ce qu'**il s'agit d'une substance de revêtement durcissable par voie radicalaire, contenant

   (B) au moins un monomère monofonctionnel, oléfiniquement insaturé, qui ne contient pas d'unités de structure aromatiques et qui forme, en soi, des homopolymères présentant une température de transition vitreuse ≥ 50°C,
   (C) au moins un monomère oléfiniquement insaturé, choisi dans le groupe constitué par des monomères difonctionnels et de fonctionnalité supérieure présentant au moins deux doubles liaisons oléfiniquement insaturées et au moins une unité de structure apportant de la souplesse dans la molécule, qui abaisse, comme constituant de réseaux tridimensionnels, leur température de transition vitreuse Tg et qui est choisi parmi les radicaux alcanediyle substitués, linéaires ou ramifiés, comprenant 4 à 30 atomes de carbone, qui peuvent également contenir des groupes cycliques dans la chaîne carbonée, pour autant que les chaînes carbonées entre les groupes contenant les doubles liaisons oléfiniquement insaturées et les groupes cycliques contiennent à chaque fois plus de 2 atomes de carbone, et
(D) au moins un photo-initiateur pour la photopolymérisation initiée par voie radicalaire ainsi que le cas échéant
(E) au moins un additif.

4. Substance de revêtement selon la revendication 3, **caractérisée en ce qu'**elle contient, par rapport à sa quantité totale, 5 à 70% en poids du monomère (B).

5. Substance de revêtement selon la revendication 3 ou 4, **caractérisée en ce qu'**elle contient, par rapport à sa quantité totale, 10 à 70% en poids du monomère (C).

6. Substance de revêtement selon l'une quelconque des revendications 3 à 5, **caractérisée en ce qu'**elle contient, par rapport à sa quantité totale, 0,1 à 10% en poids du photo-initiateur (D).

7. Substance de revêtement selon l'une quelconque des revendications 3 à 6, **caractérisée en ce qu'**elle contient, par rapport à sa quantité totale, 0,01 à 30% en poids de l'additif (E).

8. Substance de revêtement selon l'une quelconque des revendications 3 à 7, **caractérisée en ce que** le monomère (B) est choisi dans le groupe constitué par les monomères à fonctionnalité hydroxy et dans celui des monomères exempts de groupes fonctionnels réactifs (monomères neutres).

9. Substance de revêtement selon la revendication 8, **caractérisée en ce que** le monomère (B) est un monomère neutre.

10. Substance de revêtement selon la revendication 9, **caractérisée en ce que** les monomères neutres (B) sont choisis dans le groupe constitué par le (méth) acrylate de cyclohexyle, de 4-tert-butylcyclohexyle et d'isobornyle.

11. Substance de revêtement selon la revendication 10, **caractérisée en ce que** les monomères neutres (B) sont des acrylates.

12. Substance de revêtement selon l'une quelconque des revendications 3 à 11, **caractérisée en ce que** les monomères (C) contiennent deux doubles liaisons oléfiniquement insaturées et une unité de structure apportant de la souplesse dans la molécule.

13. Substance de revêtement selon l'une quelconque des revendications 3 à 12, **caractérisée en ce que** les doubles liaisons des monomères oléfiniquement insaturés (C) se trouvent dans les groupes méthacrylate et/ou acrylate.

14. Substance de revêtement selon l'une quelconque des revendications 3 à 13, **caractérisée en ce que** l'unité de structure apportant de la souplesse des monomères oléfiniquement insaturées (C) est choisie dans le groupe constitué par les radicaux hydrocarbonés aliphatiques divalents et les radicaux hydrocarbonée aliphatiques divalents, contenant des hétéroatomes.

15. Substance de revêtement selon l'une quelconque des revendications 3 à 14, **caractérisée en ce que** le photo-initiateur (D) est choisi dans le groupe constitué par les benzylmonocétals, les dérivés d'acétophénone, les acylphosphinoxides, les alphaacyloximesters, les titanocènes, les thioxanthones, les alpha-sulfonyloxycétones, et les ferrocènes.

16. Substance de revêtement selon l'une quelconque des revendications 1 à 15, **caractérisée en ce que** les additifs (E) sont choisis dans le groupe constitué par les matières sèches, les agents de protection contre la lumière, les monomères oléfiniquement insaturés différents des monomères (B) et des monomères (C), les agents d'étalement, les polyisocyanates et les polyisocyanates contenant des doubles liaisons oléfiniquement insaturées (isocyanatoacrylates).

17. Substance de revêtement selon la revendication 1 ou 2, **caractérisée en ce qu'**il s'agit d'une substance de revêtement durcissable par voie cationique, contenant

(F) au moins un composé contenant au moins deux groupes époxyde.

18. Substance de revêtement selon la revendication 17, **caractérisée en ce qu'**elle contient

(G) au moins un photo-initiateur pour la photopolymérisation initiée par voie cationique.

19. Substance de revêtement selon la revendication 18, **caractérisée en ce que** le photo-initiateur (G) est choisi dans le groupe des composés de triarylsulfonium.

20. Substance de revêtement selon l'une quelconque des revendications 17 à 19, **caractérisée en ce qu'**elle contient au moins un additif (E).

21. Procédé pour la préparation d'une substance de revêtement exempte de solvants organiques, séchant à l'air et durcissable par un rayonnement actinique selon l'une quelconque des revendications 1 à 20, **caractérisé en ce qu'**on mélange, l'un avec l'autre

(I) les constituants (A), (B), (C) et (D) ainsi que le cas échéant (E) ou, en variante,
(II) les constituants (A) et (F) ainsi que le cas échéant (G) et/ou (E)

et on homogénéise le mélange obtenu.

22. Procédé selon la revendication 21, **caractérisé en ce qu'**il est réalisé à l'abri d'un rayonnement actinique.

23. Utilisation de la substance de revêtement selon l'une quelconque des revendications 1 à 20 et de la substance de revêtement préparée à l'aide du procédé selon la revendication 21 ou 22 comme laque de revêtement de bobines.

24. Utilisation de la substance de revêtement selon l'une quelconque des revendications 1 à 20 et de la substance de revêtement préparée à l'aide du procédé selon la revendication 21 ou 22 pour la préparation de revêtements de garnissages de sol à base de PVC et de bobines et de tuyaux en acier et en aluminium, non revêtus ou prérevêtus ainsi que de SMC (compounds moulés en feuille) et BMC (compounds moulés en vrac).

25. Utilisation selon la revendication 24, **caractérisée en ce que** les revêtements sont des laquages clairs, des laquages de recouvrement, des laquages d'apprêt, des couches de protection temporaires ou permanentes, des scellages et des laquages anti-empreintes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4668529 A1
- EP 1032474 B1
- DE 19914816 A1
- EP 0928802 A1
- DE 19818735 A1

**In der Beschreibung aufgeführte Nicht-Patentliteratur**

- Römpp Lexikon Lacke und Druckfarben. Georg Thieme Verlag, 1998, 20-22
- Römpp Lexikon Lacke und Druckfarben. Georg Thieme Verlag, 1998, 538
- **JOHAN BIELEMAN.** Geeignete Lichtschutzmittel und Verlaufmittel sowie weitere übliche und bekannte Zusatzstoffe (E) gehen aus dem Lehrbuch. Wiley-VCH, 1998
- **VON R. STEPHEN DAVIDSON.** Exploring the Science, Technology and Applications of U.V. and E.B. Curing. Sita Technology Ltd, 1999
- **PETER KLAMANN.** eltosch System-Kompetenz, UV-Technik, Leitfaden für Anwender. Oktober 1998, 2